(19) **Europäisches Patentamt European Patent Office Office européen des brevets**

(11) **EP 3 930 175 B1**

(12) **FASCICULE DE BREVET EUROPEEN**

(45) Date de publication et mention de la délivrance du brevet:
**06.09.2023 Bulletin 2023/36**

(21) Numéro de dépôt: **21180445.5**

(22) Date de dépôt: **18.06.2021**

(51) Classification Internationale des Brevets (IPC):
**H02N 2/18** *(2006.01)*　　　**H02K 35/00** *(2006.01)*

(52) Classification Coopérative des Brevets (CPC):
**H02N 2/181; H02K 35/00**

(54) **DISPOSITIF DE RECUPERATION OU D'AMORTISSEMENT D'ENERGIE VIBRATOIRE D'UN ELEMENT MECANIQUE RESONANT**

VORRICHTUNG ZUR RÜCKGEWINNUNG ODER DÄMPFUNG DER SCHWINGUNGSENERGIE EINES SCHWINGUNGSFÄHIGEN MECHANISCHEN ELEMENTS

DEVICE FOR COLLECTING OR DAMPING VIBRATION ENERGY FROM A RESONANT MECHANICAL ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2020 FR 2006491**

(43) Date de publication de la demande:
**29.12.2021 Bulletin 2021/52**

(73) Titulaires:
- **Commissariat à l'énergie atomique et aux énergies alternatives 75015 Paris (FR)**
- **Université Savoie Mont Blanc 73000 Chambéry (FR)**

(72) Inventeurs:
- **MOREL, Adrien 38054 GRENOBLE CEDEX 09 (FR)**
- **BADEL, Adrien 73340 LESCHERAINES (FR)**
- **BADETS, Franck 38054 GRENOBLE CEDEX 09 (FR)**
- **GOUX, Nicolas 38054 GRENOBLE CEDEX 09 (FR)**
- **PILLONNET, Gaël 38054 GRENOBLE CEDEX 09 (FR)**

(74) Mandataire: **Brevalex Tour Trinity 1 B Place de la Défense 92400 Courbevoie (FR)**

(56) Documents cités:
**EP-A1- 3 306 802　　FR-A1- 3 069 395**

- **GOUX N ET AL: "A 500 pW 16 KHz Injection Locked Oscillator for Ultra-Low Power Time-Domain ADC Application", 2018 16TH IEEE INTERNATIONAL NEW CIRCUITS AND SYSTEMS CONFERENCE (NEWCAS), IEEE, 24 juin 2018 (2018-06-24), pages 200-204, XP033483408, DOI: 10.1109/NEWCAS.2018.8585520**

**Description**

**DOMAINE TECHNIQUE**

L'invention concerne le domaine de la récupération ou de l'amortissement de l'énergie mécanique vibratoire d'un élément mécanique résonant, ou résonateur mécanique. L'invention peut s'appliquer notamment aux domaines suivants :

- médical, comme par exemple pour des pacemakers ;
- maintenance industrielle, par exemple pour les vibrations de machines de production ;
- sportif, par exemple pour les vibrations de semelles de chaussures ;
- automobile et aéronautique, par exemple pour vibrations de moteur, de fuselage, etc. ;
- immobilier, par exemple pour les vibrations d'ouvrages tels que les ponts, les immeubles, etc.

**ÉTAT DE LA TECHNIQUE ANTÉRIEURE**

Il est connu d'utiliser un matériau piézoélectrique pour récupérer une énergie mécanique et la convertir en une énergie électrique stockable par exemple dans une capacité ou une batterie. Pour cela, le matériau piézoélectrique est par exemple placé à des endroits où d'importantes déformations mécaniques peuvent avoir lieu : semelle de chaussure, bretelles d'un sac à dos, etc.

Dans de nombreuses applications, l'énergie mécanique se présente sous la forme d'un déplacement harmonique d'une structure (vibrations d'un moteur, d'un fuselage d'avion, d'une machine-outil, etc.). Pour récupérer l'énergie mécanique associée avec la vibration de structures, il a été proposé d'utiliser des éléments mécaniques résonants, ou résonateurs mécaniques, par exemple sous forme de poutres, oscillant avec une amplitude maximale quand la fréquence des vibrations correspond à la fréquence de résonance des résonateurs sur lesquels le matériau piézoélectrique est déposé. Le matériau piézoélectrique déposé sur un tel résonateur est déformé proportionnellement (en première approximation) au déplacement du résonateur qui forme alors un générateur piézoélectrique.

Ce type de générateur piézoélectrique est très efficace quand la fréquence des vibrations correspond à la fréquence de résonance du générateur. Cependant, dès que la fréquence des vibrations s'écarte un peu de la fréquence de résonance du générateur, l'amplitude du déplacement diminue considérablement, ce qui réduit la quantité d'énergie récupérée.

Cette différence entre la fréquence de résonance du générateur et la fréquence des vibrations peut avoir de nombreuses origines en environnement réel :

- conception imprécise du générateur piézoélectrique ;
- variation des fréquences de vibration ambiantes ;
- vieillissement du générateur, menant à une modification de sa raideur par exemple ;
- variation des conditions d'utilisation (température, amplitude des vibrations) pouvant modifier sa fréquence de résonance en raison de non-linéarités mécaniques et le couplage piézoélectrique.

Pour résoudre ce problème, plusieurs méthodes ont été proposées pour augmenter la bande passante des générateurs et pour ajuster dynamiquement leur fréquence de résonance. Ces méthodes peuvent être mécaniques, magnétiques, ou électriques.

Dans le document US 8 773 004 B2, il est proposé d'ajuster électriquement la fréquence de résonance d'un générateur piézoélectrique en utilisant l'effet piézoélectrique indirect. En effet, la tension appliquée aux bornes du matériau piézoélectrique induit une force mécanique sur le résonateur. L'amplitude et la phase de la tension piézoélectrique (et donc de la force induite) ont une influence sur la dynamique du générateur. Il est donc proposé dans ce document d'ajuster dynamiquement la forme de la tension appliquée aux bornes du matériau piézoélectrique pour régler la fréquence de résonance du système, et ainsi maximiser la puissance récupérée même quand la fréquence des vibrations dévie par rapport à la fréquence de résonance « naturelle » (non modifiée par la tension appliquée aux bornes du matériau piézoélectrique) du résonateur mécanique. La solution proposée dans le document US 8 773 004 B2 nécessite, pour le réglage de la fréquence de résonance, un banc de capacités discrètes et, pour l'algorithme de contrôle, un accéléromètre déposé sur le générateur piézoélectrique. Ces deux dispositifs limitent fortement l'intégration du système. De plus, le placement de l'accéléromètre sur la structure vibrante peut s'avérer être assez contraignant.

Le document de E. Lefeuvre et al., « A comparison between several vibration-powered piezoelectric generators for standalone systems » Sensors and Actuators A : physical, 126405-16, 2006 propose une technique non-linéaire pour maximiser l'énergie récupérée à la résonance. Cette technique, appelée SSHI (« Synchronous Switch Harvesting on Inductance » en anglais), consiste à laisser le matériau piézoélectrique en circuit ouvert la majorité du temps, et à inverser les charges dans le matériau piézoélectrique quand la tension à ses bornes atteint un extremum. Cette inversion de charges s'effectuant au travers d'une capacité de stockage Cr, une partie d'entre elles restent dans la capacité et permettent ainsi de collecter de l'énergie tout en maximisant son extraction. Lors de l'inversion de charges, le matériau piézoélectrique est connecté à une inductance. La capacité intrinsèque du matériau piézoélectrique forme alors avec l'inductance une boucle L - C, et les charges (ainsi que l'énergie) sont rapidement transmises du matériau piézoélectrique jusqu'à l'inductance, puis de l'inductance jusqu'au matériau piézoélectrique, en passant par la capacité Cr (qui est bien plus importante que la capacité intrinsèque du matériau piézoélectrique, de l'ordre de 100 fois plus). Le brevet EP3306802 décrit un circuit pour la récupération d'énergie, configuré tel que sa fréquence d'oscillation libre soit sensiblement égale à la fréquence de résonance du résonateur mécanique, avec un dispositif de conversion de variation de fréquence en variation de phase

Cette technique d'extraction peut être utilisée au sein de systèmes autonomes formés de composants discrets, ou bien de circuits de type ASIC autoalimentés. Bien que cette technique soit très efficace quand la fréquence des vibrations correspond à la fréquence de résonance du générateur piézoélectrique, peu d'énergie est récupérée quand le générateur piézoélectrique est excité à des fréquences différentes de sa fréquence de résonance. Ainsi, le moindre décalage entre la fréquence de résonance du générateur piézoélectrique et la fréquence des vibrations entraine des pertes drastiques en termes de performance.

Pour faire face à ce problème, le document de E. Lefeuvre et al., « Power and frequency bandwidth improvement of piezoelectric energy harvesting devices using phase-shifted synchronous electric charge extraction interface circuit », Journal of Intelligent Material Systems and Structures, 2017, et celui de Y. Cai et al., « A piezoelectric energy-harvesting interface circuit with fully autonomous conjugate impédance matching, 156% extended bandwidth, and 0.38uW power consumption », IEEE International Solid-State Circuit Conférence (ISSCC) 2018, proposent de récupérer l'énergie de manière synchrone avec l'oscillation du résonateur, non pas sur les maximums de tension, mais avec un déphasage $\phi \in [-90,90]$. En récupérant l'énergie avec un certain déphasage par rapport aux oscillations du résonateur, il est possible de modifier électriquement la fréquence de résonance du générateur piézoélectrique par effet piézoélectrique indirect.

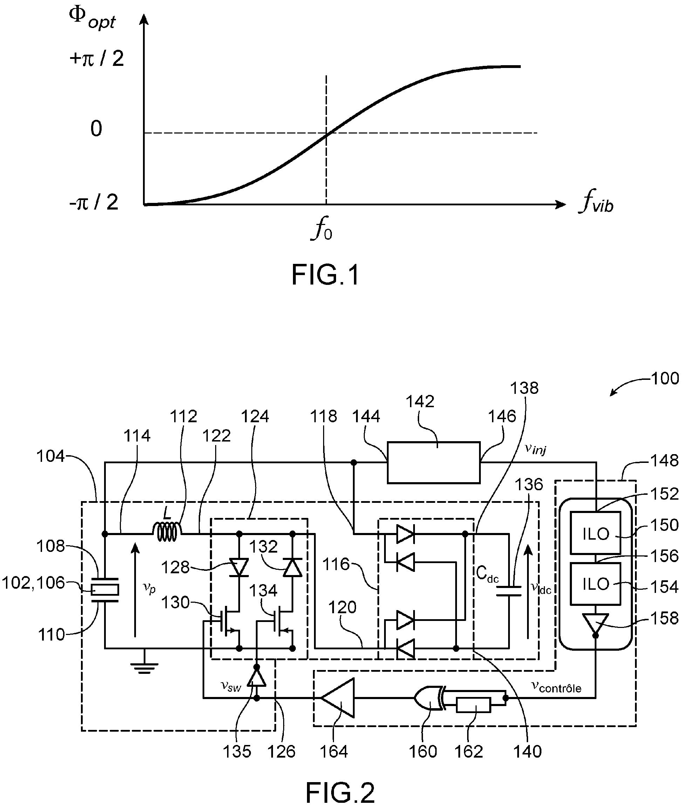

La courbe visible sur la figure 1 représente la valeur optimale de la phase $\Phi_{opt}$ des instants de récupération d'énergie en fonction de la valeur de la fréquence des vibrations $f_{vib}$, autour de la fréquence de résonance $f_0$ du générateur piézoélectrique. La pente de cette courbe dépend fortement des caractéristiques électromécaniques du générateur piézoélectrique, et plus particulièrement du couplage électromécanique du générateur (dépendant du matériau piézoélectrique utilisé et de la géométrie du résonateur mécanique) et du facteur de qualité mécanique du résonateur sur lequel le matériau piézoélectrique est déposé. Plus ce couplage est important, plus la pente de cette courbe est faible.

Le document d'Y. Cai et al. mentionné précédemment propose un contrôle semi-automatique de la valeur de la phase des instants de récupération d'énergie par rapport aux oscillations du résonateur, basé sur une table de correspondance où cinq valeurs de phase sont prédéfinies selon la fréquence d'excitation donnée par convertisseur fréquence/tension.

Toutefois, aucune des solutions précédemment décrites ne permet un contrôle et un ajustement automatiques et rapides de la valeur du déphasage entre les instants de récupération d'énergie et les oscillations du résonateur du générateur piézoélectrique.

## EXPOSÉ DE L'INVENTION

Un but de la présente invention est de proposer un dispositif de récupération d'énergie vibratoire réalisant un contrôle et un ajustement automatiques du déphasage entre les instants de récupération d'énergie et les oscillations du générateur piézoélectrique en fonction de la fréquence d'excitation.

Pour cela, l'invention propose un dispositif de récupération ou d'amortissement d'énergie vibratoire d'un résonateur mécanique, comprenant au moins :

- un générateur électrique comprenant au moins un élément de conversion d'énergie mécanique de vibration du résonateur mécanique en charges électriques couplé mécaniquement au résonateur mécanique et configuré pour délivrer un signal de conversion, correspondant soit à une tension sinusoïdale obtenue entre des première et deuxième électrodes de sortie de l'élément de conversion soit à un courant sinusoïdal obtenu sur la première électrode de sortie de l'élément de conversion, de fréquence égale à la fréquence de vibration du résonateur mécanique, le générateur électrique étant configuré pour transférer périodiquement, sur commande d'un signal destiné à être reçu sur une entrée de commande, au moins une partie des charges électriques de l'une à l'autre des première et deuxième électrodes de sortie de l'élément de conversion ;
- un convertisseur comprenant une entrée couplée électriquement à la première électrode de sortie de l'élément de conversion et configuré pour délivrer sur une sortie un signal carré de fréquence égale à la fréquence du signal de conversion ;
- un dispositif de conversion de variation de fréquence en variation de phase, comprenant au moins un premier oscillateur verrouillé par injection dont une entrée d'injection est couplée électriquement à la sortie du convertisseur et configuré tel que sa fréquence d'oscillation libre soit sensiblement égale à la fréquence de résonance du résonateur mécanique, et configuré pour délivrer, sur une sortie couplée électriquement à l'entrée de commande du générateur électrique, un signal de commande périodique de fréquence égale à la fréquence du signal de conversion et dont un déphasage, par rapport au signal de conversion, est fonction de la différence entre la fréquence du signal de conversion et la fréquence de résonance du résonateur mécanique.

Ce dispositif propose une solution de contrôle et de compensation de la différence entre la fréquence de résonance du résonateur mécanique et la fréquence de vibration à laquelle le résonateur mécanique est soumis, basée sur l'utilisation d'au moins un oscillateur verrouillé par injections (nommé ILO pour « Injection Locked Oscillator »).

Plus particulièrement, ce dispositif forme un système permettant l'autoajustement du déphasage entre la tension ou le courant généré par le générateur électrique et l'instant d'inversion des charges se produisant au sein du générateur, en fonction de la fréquence d'excitation mécanique, avec une très faible consommation et un ajustement quasi-instantané. Cet ajustement permet, grâce à l'effet piézoélectrique ou électromagnétique indirect, d'ajuster la fréquence de résonance du générateur, et de l'asservir à la fréquence de vibration afin de maximiser le transfert de puissance.

Le convertisseur peut être configuré tel que le signal carré délivré ait une première valeur lorsque la dérivée du signal de conversion est positive et ait une deuxième valeur, différente de la première valeur, lorsque la dérivée du signal de conversion est négative. Dans ce cas, le convertisseur délivre en sortie un signal dont la valeur est représentative du signe de la dérivée du signal de conversion.

Le dispositif de conversion de variation de fréquence en variation de phase peut comporter en outre :

-    un deuxième oscillateur verrouillé par injection dont une entrée d'injection est couplée à la sortie du premier oscillateur verrouillé par injection et configuré tel que sa fréquence d'oscillation libre soit sensiblement égale à la fréquence de résonance du résonateur mécanique ;
-    un circuit déphaseur 180° dont une entrée est couplée à la sortie du deuxième oscillateur verrouillé par injection.

Dans un tel dispositif de conversion, les deux ILO sont montés en quadrature. Ce dispositif permet de délivrer en sortie un signal dont le déphasage, par rapport au signal fourni par l'élément de conversion, est uniquement dû à la différence de fréquence avec la fréquence de résonance du résonateur mécanique, du fait que le circuit déphaseur permet d'annuler le déphasage de 180° apporté par les deux ILO.

Le dispositif de conversion de variation de fréquence en variation de phase peut comporter en outre une porte OU EXCLUSIF dont une première entrée est couplée électriquement à la sortie du circuit déphaseur 180°, une deuxième entrée est couplée électriquement à la sortie du circuit déphaseur 180° par l'intermédiaire d'un élément de retard, et délivrant en sortie le signal de commande périodique.

La sortie de la porte OU EXCLUSIF peut être couplée à l'entrée de commande du générateur électrique par l'intermédiaire d'un amplificateur.

Dans un premier mode de réalisation, le générateur électrique peut comporter en outre :

-    un élément de stockage d'énergie électrique comprenant une première électrode couplée électriquement à la première électrode de sortie de l'élément de conversion ;
-    un dispositif de conversion de tension alternatif - continu comprenant une première borne d'entrée couplée électriquement à la première électrode de sortie de l'élément de conversion et une deuxième borne d'entrée couplée électriquement à une deuxième électrode de l'élément de stockage d'énergie électrique ;
-    un commutateur bidirectionnel configuré pour coupler ou non la deuxième électrode de l'élément de stockage d'énergie électrique à la deuxième électrode de sortie de l'élément de conversion en fonction de la valeur du signal reçu sur l'entrée de commande du générateur électrique.

Selon une variante du premier mode de réalisation, le générateur électrique peut comporter :

-    un élément de stockage d'énergie électrique comprenant une première électrode couplée électriquement à la première électrode de sortie de l'élément de conversion ;
-    un dispositif de conversion de tension alternatif- continu ;
-    un commutateur bidirectionnel configuré pour coupler ou non une deuxième électrode de l'élément de stockage d'énergie électrique à une première borne d'entrée du dispositif de conversion de tension alternatif - continu, et coupler ou non la deuxième électrode de sortie de l'élément de conversion à une deuxième borne d'entrée du dispositif de conversion de tension alternatif - continu, en fonction de la valeur du signal reçu sur l'entrée de commande du générateur électrique.

L'élément de stockage d'énergie électrique peut comporter au moins une inductance ou au moins une capacité.

Selon un autre mode de réalisation, le générateur électrique peut comporter :

- un dispositif de conversion de tension alternatif- continu ;
- des premiers et deuxième commutateurs configurés pour coupler de manière alternée la première électrode de sortie de l'élément de conversion à la deuxième électrode de sortie de l'élément de conversion ou à une première borne d'entrée du dispositif de conversion de tension alternatif - continu à travers une capacité de résonance ;

et dans lequel une deuxième borne d'entrée du dispositif de conversion de tension alternatif - continu est couplée électriquement à une deuxième électrode de sortie de l'élément de conversion.

Le dispositif de conversion de tension alternatif - continu peut comporter un pont de diodes. En variante, le dispositif de conversion de tension alternatif - continu peut comporter un redresseur actif.

Le générateur électrique peut comporter en outre une capacité de sortie couplée électriquement à des bornes de sortie du dispositif de conversion de tension alternatif- continu.

Selon un autre mode de réalisation, le générateur électrique peut comporter :

- un dispositif de conversion de tension alternatif - continu comprenant des première et deuxième bornes d'entrée couplées respectivement aux première et deuxième électrodes de sortie de l'élément de conversion ;
- un convertisseur Buck comprenant des première et deuxième bornes d'entrée couplées respectivement à des première et deuxième bornes de sortie du dispositif de conversion de tension alternatif- continu.

Dans ce cas, le dispositif de conversion de variation de fréquence en variation de phase peut comporter en outre :

- un deuxième oscillateur verrouillé par injection dont une entrée d'injection est couplée à la sortie du premier oscillateur verrouillé par injection et configuré tel que sa fréquence d'oscillation libre soit sensiblement égale à la fréquence de résonance du résonateur mécanique ;
- un circuit déphaseur 180° dont une entrée est couplée à la sortie du deuxième oscillateur verrouillé par injection ;
- une bascule D comprenant une entrée d'horloge couplée à la sortie du circuit déphaseur 180°, une entrée de donnée sur laquelle un potentiel électrique de valeur non nulle est appliqué, une entrée de réinitialisation, et une sortie couplée à une entrée de commande d'un interrupteur du convertisseur Buck ;
- un comparateur de tension muni de deux bornes d'entrée sur lesquelles une tension délivrée sur les première et deuxième bornes de sortie du dispositif de conversion de tension alternatif - continu est appliquée, et d'une sortie couplée à l'entrée de réinitialisation de la bascule D.

L'élément de conversion peut comporter au moins une portion de matériau piézoélectrique ou au moins une bobine couplée à un élément magnétique.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente la valeur optimale de la phase des instants de récupération d'énergie en fonction de la valeur de la fréquence des vibrations dans un système de récupération d'énergie vibratoire ;
- la figure 2 représente schématiquement un dispositif de récupération d'énergie vibratoire d'un résonateur mécanique, objet de la présente invention, selon un premier mode de réalisation de l'invention ;
- la figure 3 représente schématiquement un exemple de réalisation d'un résonateur mécanique couplé à un élément de conversion d'énergie vibratoire en énergie électrique comprenant une portion de matériau piézoélectrique ;
- la figure 4 représente schématiquement un exemple de réalisation d'un commutateur bidirectionnel utilisé dans un dispositif de récupération d'énergie vibratoire d'un résonateur mécanique selon l'invention ;
- la figure 5 représente schématiquement un exemple de réalisation d'un convertisseur du dispositif de récupération d'énergie vibratoire d'un résonateur mécanique selon l'invention ;
- la figure 6 représente le principe de fonctionnement d'un ILO ;
- la figure 7 représente un exemple de réalisation d'un ILO à relaxation ;
- la figure 8 représente la caractéristique de déphasage d'un ILO ;
- la figure 9 représente la caractéristique de déphasage du dispositif de conversion de variation de fréquence en variation de phase utilisé dans le dispositif de récupération d'énergie vibratoire d'un résonateur mécanique selon l'invention ;

- la figure 10 représente un schéma-bloc modélisant, de manière simplifiée, l'influence de la boucle de contrôle réalisée dans le dispositif de récupération d'énergie vibratoire selon l'invention ;
- la figure 11 représente schématiquement un dispositif de récupération d'énergie vibratoire d'un résonateur mécanique, objet de la présente invention, selon une variante du premier mode de réalisation de l'invention ;
- la figure 12 représente schématiquement un dispositif de récupération d'énergie vibratoire d'un résonateur mécanique, objet de la présente invention, selon un deuxième mode de réalisation de l'invention ;
- la figure 13 représente schématiquement un dispositif de récupération d'énergie vibratoire d'un résonateur mécanique, objet de la présente invention, selon un troisième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Un dispositif 100 de récupération d'énergie vibratoire d'un résonateur mécanique 102 selon un premier mode de réalisation est décrit ci-dessous en lien avec la figure 2.

Le dispositif 100 comporte un générateur électrique 104 comprenant un élément 106 de conversion d'énergie mécanique de vibration du résonateur mécanique 102 en charges électriques. L'élément de conversion 106 est couplé mécaniquement au résonateur mécanique 102 et est configuré pour délivrer un signal de conversion de fréquence égale à la fréquence de vibration $f_{VIB}$ du résonateur mécanique 102 (généralement comprise entre 30 Hz et 300 Hz). Dans le premier mode de réalisation décrit ici, le signal de conversion correspond à une tension sinusoïdale obtenue entre des première et deuxième électrodes de sortie 108, 110 de l'élément de conversion 106. Sur la figure 2, cette tension sinusoïdale est appelée $v_P$. De plus, sur l'exemple de réalisation représenté sur la figure 2, la deuxième électrode de sortie 110 de l'élément de conversion 106 est reliée à un potentiel électrique de référence qui correspond ici à la masse.

De manière avantageuse, l'élément de conversion 106 comporte au moins une portion de matériau piézoélectrique. Sur la figure 2, le résonateur mécanique 102 et l'élément de conversion 106 sont représentés ensemble sous la forme d'un seul élément.

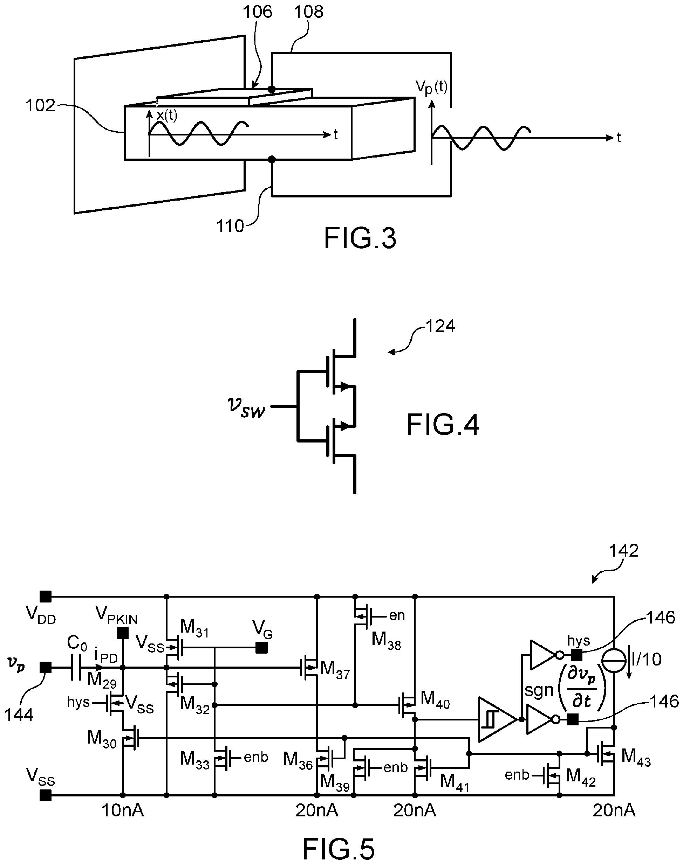

La figure 3 représente un exemple de réalisation du résonateur mécanique 102, ici de type poutre, couplé à un élément de conversion 106 comprenant une portion de matériau piézoélectrique.

Dans le premier mode de réalisation décrit ici, le générateur électrique 104 comporte également un élément 112 de stockage d'énergie électrique comprenant une première électrode 114 couplée électriquement à la première électrode de sortie 108 de l'élément de conversion 106. Dans l'exemple de réalisation représenté sur la figure 2, l'élément 112 de stockage d'énergie électrique correspond à une inductance. La valeur de cette inductance est par exemple comprise entre environ 100 μH et 10 mH. En variante, cet élément 112 de stockage d'énergie électrique peut correspondre à une capacité, par exemple formée par au moins un condensateur.

Le générateur électrique 104 comporte également un dispositif 116 de conversion de tension alternatif - continu comprenant une première borne d'entrée 118 couplée électriquement à la première électrode de sortie 108 de l'élément de conversion 106 et une deuxième borne d'entrée 120 couplée électriquement à une deuxième électrode 122 de l'élément 112 de stockage d'énergie électrique. Dans le premier mode de réalisation décrit ici, le dispositif 116 de conversion de tension alternatif - continu comporte un pont de diodes, ou pont de Graetz, formé par quatre diodes. En variante, d'autres types de dispositif de conversion de tension alternatif - continu peuvent être utilisés pour former le dispositif 116, comme par exemple un redresseur de tension actif. Ce redresseur de tension actif peut être par exemple réalisé comme l'un de ceux décrits dans le document de Martin Nielsen-Lönn et al., « Design of Efficient CMOS Rectifiers for Integrated Piezo-MEMS Energy-Harvesting Power Management Systems », 2015 European Conference on Circuit Theory and Design (ECCTD), Trondheim, Norway, 2015.

Le générateur électrique 104 comporte également un commutateur bidirectionnel 124 configuré pour coupler ou non la deuxième électrode 122 de l'élément 112 de stockage d'énergie électrique à la deuxième électrode de sortie 110 de l'élément de conversion 106 en fonction de la valeur du signal reçu sur une entrée de commande 126 du générateur électrique 104. Sur la figure 2, le signal reçu sur l'entrée de commande 126 du générateur électrique 104 est appelé $v_{SW}$.

Sur l'exemple de réalisation représenté sur la figure 2, le commutateur bidirectionnel 124 comporte une première diode 128 et un transistor NMOS 130 formant, lorsque le transistor NMOS 130 est à l'état passant, un premier chemin de conduction permettant la circulation du courant depuis la deuxième électrode 122 de l'élément 112 de stockage d'énergie électrique vers la deuxième électrode de sortie 110 de l'élément de conversion 106. L'anode de la première diode 128 est couplée électriquement à la deuxième électrode 122 de l'élément 112 de stockage d'énergie électrique. La cathode de la première diode 128 est couplée électriquement au drain du transistor NMOS 130. La source du transistor NMOS 130 est couplée électriquement à la deuxième électrode de sortie 110 de l'élément de conversion 106. La grille du transistor NMOS 130 est couplée électriquement à l'entrée de commande 126 du générateur électrique 104.

Le commutateur bidirectionnel 124 comporte également une deuxième diode 132, un transistor PMOS 134 et un inverseur 135 formant, lorsque le transistor PMOS 134 est à l'état passant, un deuxième chemin de conduction permettant la circulation du courant depuis la deuxième électrode de sortie 110 de l'élément de conversion 106 vers deuxième électrode 122 de l'élément 112 de stockage d'énergie électrique. La cathode de la deuxième diode 132 est couplée électriquement à la deuxième électrode 122 de l'élément 112 de stockage d'énergie électrique. L'anode de la deuxième diode 132 est couplée électriquement au drain du transistor PMOS 134. La source du transistor PMOS 134 est couplée électriquement à la deuxième électrode de sortie 110 de l'élément de conversion 106. La grille du transistor PMOS 134 est couplée électriquement à l'entrée de commande 126 du générateur électrique 104 par l'intermédiaire de l'inverseur 135.

Ainsi, lorsque le signal de commande $v_{SW}$ a une valeur haute, ou '1', les transistors NMOS 130 et PMOS 134 sont à l'état passant, et le courant peut alors circuler par l'un des premier et deuxième chemins de conduction entre la deuxième électrode 122 de l'élément 112 de stockage d'énergie électrique et la deuxième électrode de sortie 110 de l'élément de conversion 106, ce qui permet de faire passer les charges de l'une à l'autre des électrodes de sortie 108, 110 de l'élément de conversion 106. Lorsque le signal de commande $v_{SW}$ a une valeur basse, ou '0', les transistors NMOS 130 et PMOS 134 sont à l'état bloqué, et le courant ne peut plus circuler entre la deuxième électrode de sortie 110 de l'élément de conversion 106 et la deuxième électrode 122 de l'élément 112 de stockage d'énergie électrique.

La figure 4 représente une variante de réalisation du commutateur bidirectionnel 124. Dans cette variante, le commutateur bidirectionnel 124 comporte deux transistor NMOS (mais qui pourrait être de type PMOS selon une autre variante) disposés tête bêche l'un par rapport l'autre, c'est-à-dire comportant leur source couplées l'une à l'autre et leur grille recevant le signal de commande $v_{SW}$.

Le générateur électrique 104 comporte également une capacité de sortie 136, formée par exemple par un condensateur, couplée électriquement à des bornes de sortie 138, 140 du dispositif 116 de conversion de tension alternatif - continu. La capacité de sortie 136 a une valeur $C_{DC}$ par exemple comprise entre environ 1 $\mu$F et 100 $\mu$F, et la tension à ses bornes est appelée $v_{DC}$.

Dans le premier mode de réalisation décrit ici, le générateur électrique 104 a une structure de type SSH-série (SSHI lorsque l'élément 112 de stockage d'énergie électrique est une inductance, et SSHC lorsque l'élément 112 est un ensemble de capacités). Ainsi, le générateur électrique 104 est configuré pour transférer périodiquement, sur commande du signal $v_{SW}$, au moins une partie des charges électriques de l'une à l'autre des première et deuxième électrodes de sortie 108, 110 de l'élément de conversion 106, grâce à la commutation du commutateur bidirectionnel 124. Lorsque le générateur électrique 104 a une structure de type SSHC, le contrôle du commutateur bidirectionnel 124 peut être adapté de la même manière que dans les documents suivants : Sijun Du et al., « A Fully Integrated Split-Electrode SSHC Rectifier for Piezoelectric Energy Harvesting », IEEE Journal of Solid-State Circuits, vol.54, Issue 6, juin 2019, pages 1733-1743 ; L. Liu et al., « An Efficient Interface Circuit for Miniature Piezoelectric Energy Harvesting with P-SSHC », Journal of Circuits, Systems and Computers, 2019.

Le dispositif 100 comporte également un convertisseur 142 comprenant une entrée 144 couplée électriquement à la première électrode de sortie 108 de l'élément de conversion 106. Le convertisseur 142 est configuré pour délivrer sur une sortie 146 un signal carré $v_{INJ}$ de fréquence égale à la fréquence du signal de conversion $v_P$ délivré par l'élément de conversion 106.

Dans ce premier mode de réalisation, le convertisseur 142 délivre en sortie le signal carré $v_{INJ}$ de fréquence égale à la fréquence du signal de conversion $v_P$ et dont la valeur commute quand l'une des valeurs crêtes de $v_P$ est atteinte. Plus particulièrement, le convertisseur 142 est configuré tel que le signal carré $v_{INJ}$ délivré ait une première valeur (par exemple '1') lorsque la dérivée de la tension $v_P$ est positive et ait une deuxième valeur (par exemple '0'), différente de la première valeur, lorsque la dérivée de la tension $v_P$ est négative.

La figure 5 représente un exemple de réalisation du convertisseur 142.

Le convertisseur 142 implémente ici la fonction « signe de la dérivé », notée $sgn(\frac{d(.)}{dt})$, appliquée à la tension aux bornes de Cp. Pour cela, la tension $v_P$ est appliquée à une capacité $C_0$. Le courant passant dans cette capacité, appelé $i_{PD}$, est proportionnel à $\frac{d(v_p - V_{PKIN})}{dt}$, avec $v_{PKIN}$ qui correspond à une tension interne au convertisseur 142 et étant maintenue relativement constante grâce à une boucle formée par des transistors nommés $M_{31}$, $M_{32}$ et $M_{37}$ sur

la figure 5. La valeur du courant $i_{PD}$ est en conséquent seulement fonction du terme $\dfrac{d(v_p)}{dt}$.

Lorsque le courant $i_{PD}$ est positif, ce courant passe dans le transistor $M_{32}$ pour aller ensuite à la masse (notée $V_{SS}$ sur la figure 5). Quand la dérivé de la tension $v_P$ devient négative, le courant $i_{PD}$ devient lui aussi négatif, et passe dans le transistor $M_{31}$ au lieu de passer dans le transistor $M_{32}$. Ainsi, quand le courant $i_{PD}$ change de polarité, il ne passe pas par le même chemin, ce qui crée une différence de tension sur le potentiel de grille $V_G$ des transistors $M_{31}$ et $M_{32}$. Cette différence en tension est ensuite amplifiée grâce à des transistors $M_{40}$ et $M_{41}$. En sortie 146 du convertisseur 142, une tension carré dont l'état dépend de la polarité du courant $i_{PD}$, et donc du signe de la dérivé de la tension $v_P$, est obtenue.

Le fonctionnement détaillé d'un tel convertisseur 142 est donné par exemple dans le document de A. Morel et al., « A shock optimized SECE integrated circuit », IEEE J. Solid-State Circuit, vol. 53, n°12, décembre 2018, pages 3420-3433.

Le dispositif 100 comporte également un dispositif 148 de conversion de variation de fréquence en variation de phase.

Ce dispositif 148 comprend un premier ILO 150 dont une entrée d'injection 152 est couplée électriquement à la sortie 146 du convertisseur 142 et qui est configuré tel que sa fréquence d'oscillation libre soit sensiblement égale à la fréquence de résonance du résonateur mécanique 102.

Le dispositif 148 comporte en outre un deuxième ILO 154 dont une entrée d'injection 156 est couplée à la sortie du premier ILO 150. Comme pour le premier ILO 150, le deuxième ILO 154 est configuré tel que sa fréquence d'oscillation libre soit sensiblement égale à la fréquence de résonance du résonateur mécanique 102.

Dans le premier mode de réalisation décrit ici, les ILO 150 et 154 sont du type à relaxation. En variante, les ILO 150 et 154 peuvent correspondre à des ILO de type harmonique.

Le dispositif 148 comporte également un circuit déphaseur 180°, référencé 158, dont une entrée est couple à la sortie du deuxième ILO 154. Dans l'exemple de réalisation représenté sur la figure 2, étant donné que le signal délivré en sortie du deuxième ILO 154 est un signal carré, car le signal reçu et traité par le dispositif 148 est un signal carré, le circuit 158 est formé par un inverseur.

Le dispositif 148 comporte en outre une porte OU EXCLUSIF 160 dont une première entrée est couplée électriquement à la sortie du circuit 158 et dont une deuxième entrée est couplée électriquement à la sortie du circuit 158 par l'intermédiaire d'un élément de retard 162. La sortie de la porte OU EXCLUSIF 160 est couplée à un amplificateur 164 dont la sortie est couplée à l'entrée de commande 126 du générateur électrique 104.

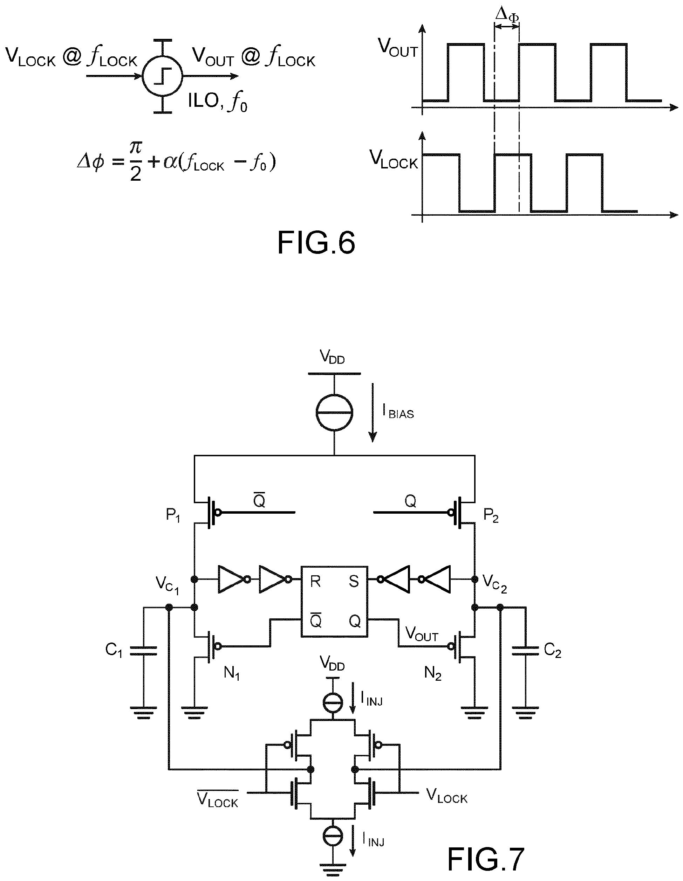

Le principe de fonctionnement d'un ILO est rappelé ci-dessous, en lien avec la figure 6.

Un ILO est un oscillateur caractérisé par sa fréquence d'oscillation libre $f_0$ et sur lequel un signal de verrouillage, ou d'injection, $v_{LOCK}$ de fréquence $f_{LOCK}$ est appliqué. L'oscillateur ayant pour comportement de se synchroniser sur le signal d'injection, la fréquence du signal de sortie $v_{OUT}$ délivré par l'ILO correspond à la fréquence de verrouillage $f_{LOCK}$. Le signal de sortie $v_{OUT}$ est déphasé de $\Delta\Phi$ par rapport à $v_{LOCK}$.

La valeur du déphasage $\Delta\Phi$ est fonction du terme ($f_{LOCK}$-$f_0$) et s'exprime par la relation :

$$\Delta\Phi = \frac{\pi}{2} + \alpha(f_{LOCK} - f_0)$$

Un ILO établit donc un déphasage entre le signal de sortie $v_{OUT}$ et le signal de verrouillage $v_{LOCK}$ qui dépend de la fréquence du signal de verrouillage $f_{LOCK}$ et de sa fréquence d'oscillation libre $f_0$. L'ILO forme donc un convertisseur variation de fréquence / variation de phase convertissant la fréquence de verrouillage $f_{LOCK}$ en un déphasage $\Delta\Phi$. De plus, la fréquence du signal de verrouillage $f_{LOCK}$ est conservée dans le signal de sortie $v_{OUT}$.

Le schéma d'un exemple de réalisation d'un ILO à relaxation est représenté sur la figure 7.

Sur la figure 7, l'ILO comporte une bascule RS. A l'état initial, il est considéré que Q = 0 et Q = 1. Le transistor $P_2$ (de type PMOS) est à l'état bloqué et le transistor $P_1$ (également de type PMOS) est à l'état passant, le courant de polarisation $I_{BIAS}$ étant dirigé dans la capacité $C_1$ et charge cette capacité. Lorsque la tension aux bornes de la capacité $C_1$ dépasse le seuil de commutation $V_{INV}$ des inverseurs couplés aux entrées R et S de la bascule, l'entrée R passe alors à l'état 1 ce qui implique un nouvel état pour les sorties de la bascule RS : Q = 1 et $\overline{Q}$ = 0. Le transistor $P_2$ passe alors à l'état passant et le transistor $P_1$ passe à l'état bloqué. Le courant de polarisation $I_{BIAS}$ est dirigé vers la capacité $C_2$ et charge cette capacité. Lorsque la tension aux bornes de la capacité C2 dépasse le seuil de commutation $V_{INV}$ des inverseurs couplés aux entrées R et S de la bascule, l'entrée S passe alors à l'état 1 et les sorties de la bascule RS changent de nouveau : Q= 0 et $\overline{Q}$ = 1.

La répétition de ce cycle permet le démarrage des oscillations de l'ILO.

La fréquence d'oscillation libre $f_0$ de l'ILO dépend des valeurs du courant de polarisation $I_{BIAS}$, des capacités de charges $C_1 = C_2 = C$, et de la tension de commutation des inverseurs $V_{INV}$. Elle s'exprime par la relation :

$$f_0 = \frac{I_{BIAS}}{2\,C\,V_{inv}}$$

L'étude du verrouillage de l'ILO est décrite en détail dans le document de N. Goux et al., « A 500 pW 16 KHz Injection Locked Oscillator for Ultra-Low Power Time-Domain ADC Application », 2018 16th IEEE International New Circuits and Systems Conférence, p. 200-204.

Le verrouillage de l'ILO est réalisé grâce à l'injection d'un courant $I_{LOCK}$ dans les capacités de charge $C_1$ et $C_2$, par l'intermédiaire d'un injecteur de courant à inverseurs contrôlé par la tension $v_{LOCK}$. Cette injection de courant change la valeur moyenne du courant de polarisation $I_{BIAS}$, produisant ainsi le verrouillage de l'oscillateur sur la fréquence $f_{LOCK}$.

Dans cet ILO, le déphasage $\Delta\Phi$ s'exprime par l'équation suivante :

$$\Delta\Phi = \frac{\pi}{2} + \frac{\pi C V_{INV}}{I_{LOCK}}(f_{LOCK} - f_0)$$

Ce déphasage est linéaire et proportionnel à la fréquence de verrouillage du système. Le gain du système est quant à lui fixé par la pente de la droite représentée par cette équation. Il s'écrit :

$$\alpha = \frac{\pi C V_{INV}}{I_{LOCK}}$$

Ce gain est donc réglable par les paramètres $C$, $V_{INV}$ et $I_{LOCK}$.

La plage de verrouillage $\Delta f$ de l'ILO est définie par l'équation :

$$\frac{\Delta f}{f_0} = \frac{2 I_{LOCK}}{I_{BIAS}}$$

La valeur de $\Delta f$ dépend donc du rapport entre les courants de polarisation et de synchronisation $I_{BIAS}$ et $I_{LOCK}$.

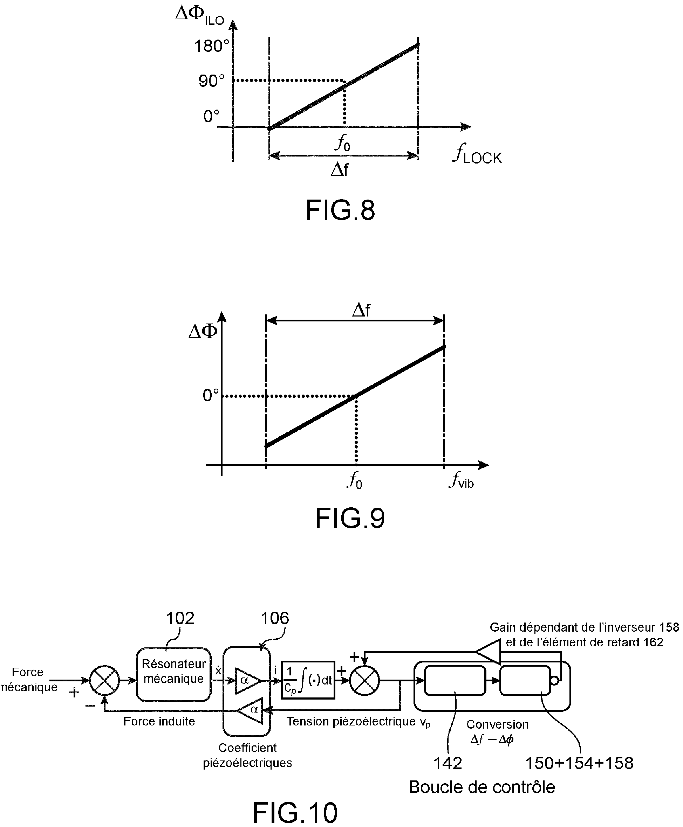

La caractéristique de déphasage de l'ILO est représentée sur la figure 8. Cette caractéristique correspond à une courbe croissante et linéaire sur la plage de verrouillage $\Delta f$ de l'ILO. La valeur de ce déphasage est de 90° à la fréquence $f_0$.

Dans le dispositif 148, les deux ILO 150 et 154 sont montés en quadrature. Un tel montage consiste à verrouiller les deux ILO 150, 154 en série sur leur fréquence d'oscillation libre $f_0$, de manière à obtenir des signaux de sortie en quadrature, c'est-à-dire déphasés de 90° l'un par rapport à l'autre.

Dans le dispositif 148, on souhaite obtenir un déphasage nul entre le signal $v_{INJ}$ appliqué en entrée du dispositif 148 et le signal $v_{SW}$ obtenu en sortie du dispositif 148 lorsque les ILO 150 et 154 sont verrouillés sur une fréquence égale $f_0$, c'est-à-dire lorsque la fréquence du signal $v_{INJ}$ (qui est égale à la fréquence de vibration $f_{VIB}$ du résonateur 102) est égale $f_0$. C'est la raison pour laquelle l'inverseur 158 est présent en sortie de l'ILO 154, ajoutant ainsi un déphasage de 180° au déphasage des ILO 150, 154 (qui correspond à 90° + 90°).

La phase du signal de sortie $V_{SW}$ est donc égale à celle du signal $v_{INJ}$ modulo 360°, ce qui permet d'avoir en sortie du dispositif 148 un signal de contrôle $V_{SW}$ en phase avec le signal $v_{INJ}$ lorsque le résonateur mécanique 102 vibre à sa fréquence de résonance en circuit ouvert, et qui est déphasé proportionnellement à la différence de fréquence $f_{VIB}$ - fréquence de résonance du résonateur mécanique 102 lorsque $f_{VIB}$ est différent de $f_0$.

De manière plus générale, le déphasage entre le signal $v_{SW}$ obtenu en sortie du dispositif 148 et le signal $v_{INJ}$ appliqué en entrée du dispositif 148 s'exprime par l'équation suivante :

$$\phi = 2\pi + 2\frac{\pi C V_{INV}}{I_{LOCK}}(f_{vib} - f_0)$$

La caractéristique du déphasage du dispositif 148 est représentée sur la figure 9. Sur cette caractéristique, la phase du signal de sortie est proportionnelle à la fréquence du signal de verrouillage. La pente 's' de cette caractéristique s'exprime par l'équation :

$$s = \frac{2CV_{INV}}{I_{BIAS}}$$

Le dispositif 148 dispose donc :

- d'une fréquence d'oscillation libre $f_0$ réglable par l'ajustement de la valeur du courant de polarisation $I_{BIAS}$ (car $f_0 = \frac{I_{BIAS}}{2CV_{INV}}$) ;

- d'une plage de verrouillage adaptable par l'ajustement de la valeur du courant d'injection $I_{INJ}$ (car $\frac{\Delta f}{f_0} = \frac{2I_{INJ}}{I_{BIAS}}$) ;

- d'une pente réglable par l'ajustement de la valeur du courant d'injection $I_{INJ}$ (car $s = \frac{2CV_{INV}}{I_{BIAS}}$).

Afin d'obtenir le fonctionnement souhaité, les ILO 150 et 154 sont calibrés (lors du fonctionnement du dispositif 100 ou lors d'une phase de pré-calibration avant le fonctionnement du dispositif 100) afin que la fréquence d'oscillation libre $f_0$ des ILO 150, 154 soit égale à la fréquence de résonance en circuit ouvert du résonateur mécanique 102. Cet ajustement peut être réalisé en ajustant la valeur de $I_{BIAS}$.

Les ILO 150 et 154 sont également calibrés tels que la pente de la caractéristique $\phi(f_{vib} - f_0)$ (représentée sur la figure 9) soit égale ou similaire à celle de la caractéristique $\phi_{opt}(f_{vib})$ (représentée sur la figure 1). Cet ajustement peut être réalisé en ajustant la valeur d'$I_{LOCK}$.

Le dispositif 148 permet de fixer la phase du signal de contrôle $v_{SW}$ conformément à l'évolution du déphasage entre la fréquence de vibration $f_{VIB}$ et la fréquence de résonance du résonateur 102.

Le dispositif 148 permet donc notamment :

- de conserver la fréquence du signal d'injection $v_{INJ}$ dans le signal de contrôle délivré $v_{SW}$;
- de délivrer le signal de contrôle $v_{SW}$ avec une phase variable en fonction de sa fréquence (qui correspond à la fréquence de vibration mécanique $f_{VIB}$).
- d'avoir un déphasage nul à la fréquence de résonance en circuit ouvert du résonateur 102 ;
- d'avoir une plage de verrouillage réglable en fonction des paramètres du matériau piézoélectrique.

Le fonctionnement global du dispositif 100 représenté sur la figure 2 est décrit ci-dessous.

Dans un premier temps, l'élément de conversion 106 fonctionne en circuit ouvert. Pour cela, le commutateur bidirectionnel 124 est placé en position ouverte (transistors 130 et 134 mis à l'état bloqué). Aucun courant ne traverse donc l'élément 112 de stockage d'énergie électrique, ni le dispositif 116. En considérant des pertes diélectriques négligeables, la tension $v_P$ aux bornes de l'élément de conversion 106, qui est par exemple de l'ordre de 5 à 30 Volts d'amplitude, peut être exprimé en fonction du déplacement mécanique x tel que :

$$v_p(t) - v_p(t_0) = \frac{\alpha}{C_p}(x(t) - x(t_0)) \qquad (1)$$

avec $\alpha$ représentant le facteur de force (qui correspond au rapport entre la force générée par le matériau piézoélectrique sur le résonateur mécanique et la tension aux bornes du matériau piézoélectrique) du matériau piézoélectrique de l'élément 106, et Cp la capacité intrinsèque du matériau piézoélectrique (par exemple comprise entre environ 100 pF et 100 nF). En choisissant $t_0 = 0$ comme étant le dernier instant où l'énergie a été récupéré, les conditions $v_p(t_0) = v_0$ et $x(t_0) = x_0$ sont donc obtenues.

Le convertisseur 142 forme un bloc commutant la valeur du signal de sortie $v_{INJ}$ quand la valeur crête de la tension $v_P$ est atteinte. Lorsque la dérivé de la tension $v_P$ est positive, la valeur de $v_{INJ}$ est '1', et quand la dérivé de la tension $v_P$ est négative, la valeur de $v_{INJ}$ est '0'. Ainsi, son fonctionnement peut être résumé par l'équation :

$$v_{INJ} = sgn\left(\frac{dv_p}{dt}\right)$$

avec *sgn* la fonction signe défini tel que :

$$\forall u \in \mathbb{R}, sgn(u) = V_{DD}\left(\frac{1}{2} + \frac{|u|}{2u}\right)$$

avec $V_{DD}$ correspondant à la tension d'alimentation du convertisseur 142.

En considérant les précédentes équations, on obtient :

$$v_{INJ} = sgn\left(\frac{\alpha}{C_p}\frac{dx}{dt}\right) = sgn\left(\frac{dx}{dt}\right)$$

Ainsi, la tension de sortie $v_{INJ}$ du convertisseur 142 comporte l'information de la phase et de la fréquence de la déformation mécanique du résonateur mécanique 102.

Ce signal est envoyé en entrée du dispositif 148. Le signal $v_{contrôle}$ obtenu en sortie de l'inverseur 158 est un signal carré de fréquence égale à la fréquence $f_{VIB}$ de la vibration mécanique du résonateur 102, et déphasé de $\Delta\phi$ par rapport au signal $v_{INJ}$.

Le signal $v_{contrôle}$ passe dans la porte OU EXCLUSIF 160 dont une des branches d'entrée comporte l'élément de retard 162, afin de générer le signal $v_{SW}$ qui passe à l'état haut sur chaque front de $v_{contrôle}$ et reste à l'état haut pour une durée programmable correspondant à la durée du retard appliqué par l'élément 162. La valeur optimale de ce délai dépend principalement de la valeur de l'inductance L formant l'élément 112 de stockage d'énergie électrique, de la capacité $C_P$ du matériau piézoélectrique de l'élément de conversion 106 et du générateur piézoélectrique. Cette durée programmable peut aussi être réglée dynamiquement avec par exemple un algorithme du gradient, ce qui complique la boucle de contrôle mais permet un réglage plus fin de la dynamique du générateur piézoélectrique. Un algorithme du gradient est par exemple décrit dans le document de A. Morel et al., « Self-Tunable Phase-Shifted SECE Piezoelectric Energy-Harvesting IC with a 30 nW MPPT Achieving 446% Energy-Bandwidth Improvement and 94% Efficiency », 2020 IEEE International Solid- State Circuits Conférence - (ISSCC).

Lorsque $v_{SW}$ est à l'état haut, l'élément 112 de stockage d'énergie électrique est alors connecté aux deux électrodes de sortie 108, 110 de l'élément de conversion 106. L'énergie commence à être transférée de l'élément de conversion 106 à l'élément 112 de stockage d'énergie électrique. La tension $v_P$ diminue rapidement, et le courant dans l'élément 112 augmente. Quand $v_{SW}$ retombe à l'état bas, alors tout le courant restant dans l'élément 112 est alors redirigé vers la capacité de sortie 136, en sortie du convertisseur 116.

Ainsi, au sein du dispositif 100, le convertisseur 142 et le dispositif 148 forment une boucle de contrôle qui ajuste la phase d'inversion des charges aux bornes de l'élément de conversion 106 en fonction de l'écart entre la fréquence de vibration mécanique ($f_{vib} = f_{inj}$) et fréquence de résonance du résonateur mécanique 102.

Dans ce dispositif 100, l'information de la fréquence d'excitation mécanique du résonateur 102 ainsi que la phase du déplacement mécanique du résonateur 102 est retrouvée à partir de la tension $v_P$ grâce au convertisseur 142, et est ensuite transmise au dispositif 148 qui forme un convertisseur fréquence/phase. Le signal obtenu en sortie du dispositif 148 sert ensuite au contrôle du commutateur bidirectionnel 124 permettant l'extraction de l'énergie par le dispositif 100.

L'ajustement de $\Delta\Phi$ permet, grâce à l'effet piézoélectrique indirect, d'ajuster la fréquence de résonance du résonateur mécanique 102, et de l'asservir à la fréquence de vibration $f_{VIB}$ afin de maximiser le transfert de puissance.

L'effet piézoélectrique indirect traduit la conversion (piézoélectrique) de la tension aux bornes du matériau piézoélectrique en une force appliquée sur le résonateur mécanique. L'inversion des charges permet de modifier la forme temporelle de la tension piézoélectrique (et donc la forme de la force appliquée sur le résonateur) et modifie ainsi la dynamique du système (et donc sa fréquence de résonance). En outre, l'ajustement du moment d'inversion des charges permet d'ajuster la fréquence de résonance du système grâce à cet effet.

La figure 10 représente un schéma-bloc modélisant, de manière simplifiée, l'influence de la boucle de contrôle réalisée dans le dispositif 100 sur la tension $v_P$, et donc sur la fréquence de résonance du résonateur mécanique 102.

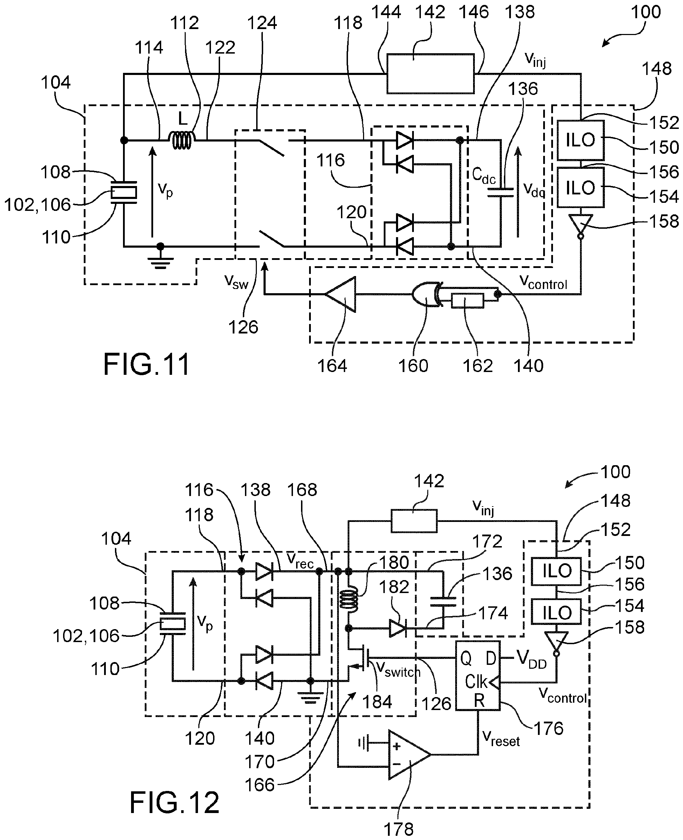

Le dispositif 100 de récupération d'énergie vibratoire du résonateur mécanique 102 selon une variante du premier mode de réalisation est décrit ci-dessous en lien avec la figure 11.

Contrairement à la configuration précédemment décrite en lien avec la figure 2 dans laquelle le commutateur bidirectionnel 124 est configuré pour coupler ou non la deuxième électrode 122 de l'élément 112 de stockage d'énergie électrique à la deuxième électrode de sortie 110 de l'élément de conversion 106 en fonction de la valeur du signal reçu sur l'entrée de commande 126 du générateur électrique 104, le commutateur bidirectionnel 124 est ici configuré pour coupler ou non la deuxième électrode 122 de l'élément 112 de stockage d'énergie électrique à la première borne d'entrée 118 du dispositif de conversion de tension alternatif - continu 116, et coupler ou non la deuxième électrode de sortie 110 de l'élément de conversion 106 à la deuxième borne d'entrée 120 du dispositif de conversion de tension alternatif - continu 106, en fonction de la valeur du signal reçu sur l'entrée de commande du générateur électrique.

Dans cette variante, l'inversion des charges se faisant au travers de la capacité de sortie 136, une partie de l'énergie reste dans la capacité de sortie 136 durant l'inversion.

D'autres variantes du premier mode de réalisation sont possibles, notamment en disposant différemment le commutateur bidirectionnel 124 et l'élément 112 de stockage d'énergie électrique au sein du dispositif 100.

Le dispositif 100 de récupération d'énergie vibratoire du résonateur mécanique 102 selon un deuxième mode de réalisation est décrit ci-dessous en lien avec la figure 12.

Comme dans le premier mode de réalisation, le dispositif 100 comporte le résonateur mécanique 102, le générateur électrique 104, le convertisseur 142 et le dispositif 148 de conversion de variation de fréquence en variation de phase.

Par contre, contrairement au premier mode de réalisation, le dispositif 116 de conversion de tension alternatif - continu du générateur électrique 104 comporte, dans ce deuxième mode de réalisation, ses première et deuxième bornes d'entrée 118, 120 couplées respectivement aux première et deuxième électrodes de sortie 108, 110 de l'élément de conversion 106.

Le générateur électrique 104 comporte en outre un convertisseur Buck 166 comprenant des première et deuxième bornes d'entrée 168, 170 couplées respectivement aux première et deuxième bornes de sortie 138, 140 du dispositif 116 de conversion de tension alternatif - continu. Le convertisseur Buck 166 comporte deux bornes de sortie 172, 174 couplées à la capacité de sortie 136.

Le dispositif 148 de conversion de variation de fréquence en variation de phase dans ce deuxième mode de réalisation est également différent de celui du dispositif 100 selon le premier mode de réalisation.

Le dispositif 148 comporte une bascule D 176 comprenant une entrée d'horloge couplée à la sortie du circuit déphaseur 180° 158, une entrée de donnée sur laquelle un potentiel électrique de valeur non nulle ($V_{DD}$ sur la figure 12) est appliqué, une entrée de réinitialisation, et une sortie couplée à l'entrée de commande d'un interrupteur du convertisseur Buck 166 qui correspond à l'entrée de commande 126 du générateur électrique 104.

Le dispositif 148 comporte également un comparateur de tension 178 muni de deux bornes d'entrée sur lesquelles une tension (appelée $v_{rec}$ sur la figure 12) délivrée sur les première et deuxième bornes de sortie 138, 140 du dispositif 116 de conversion de tension alternatif - continu est appliquée, et d'une sortie couplée à l'entrée de réinitialisation de la bascule D 176.

Sur l'exemple de réalisation représenté sur la figure 12, le convertisseur Buck 166 comporte une inductance 180, une diode 182 et un transistor MOS 184 formant l'interrupteur auquel la sortie de la bascule D 176 est couplée.

Dans ce deuxième mode de réalisation, la bascule D 176 pilote l'état bloqué ou passant du transistor MOS 184, l'état de la bascule D 176 étant remis en zéro depuis son entrée de réinitialisation lorsque la tension $v_{rec}$ délivrée par le dispositif 116 est nulle.

En variante du deuxième mode de réalisation décrit ci-dessus, le convertisseur Buck 166 peut être remplacé par une structure de type Buck-Boost ou de type Boost.

En variante, l'inductance 180 du convertisseur Buck 166 peut également être remplacée par un transformateur, par exemple un convertisseur de type Flyback.

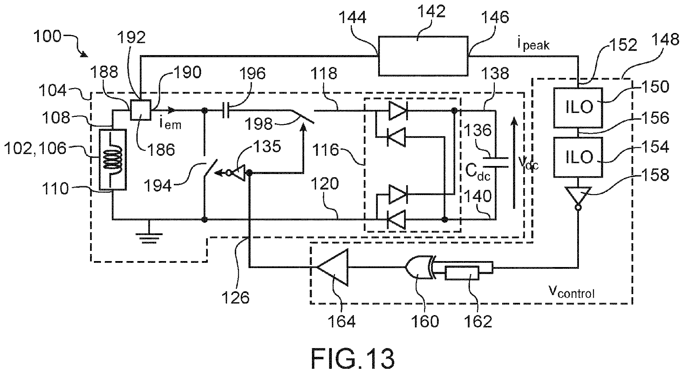

Le dispositif 100 de récupération d'énergie vibratoire du résonateur mécanique 102 selon un troisième mode de réalisation est décrit ci-dessous en lien avec la figure 13.

Dans ce troisième mode de réalisation, l'élément 106 de conversion d'énergie mécanique de vibration du résonateur mécanique 102 en charges électriques comporte une ou plusieurs bobines couplées à un élément magnétique. Le signal de conversion délivré par l'élément de conversion 106 et dont la fréquence est égale à la fréquence de vibration du résonateur mécanique 102 correspond à un courant sinusoïdal obtenu sur la première électrode de sortie 108 de l'élément de conversion 106. Sur la figure 13, ce courant est appelé $i_{em}$.

Dans ce troisième mode de réalisation, le dispositif 100 comporte un élément 186 permettant de retranscrire la valeur du courant $i_{em}$ obtenu sur la première électrode de sortie 108 de l'élément de conversion 106 sous la forme d'une tension qui puisse être exploitée par le convertisseur 142. Un tel élément 186 correspond par exemple à une résistance couplée à un amplificateur. L'élément 186 comporte une entrée 188 couplée à la première électrode de sortie 108 de l'élément de conversion 106 et sur laquelle le courant $i_{em}$ délivré par l'élément de conversion 106 est envoyé. Le courant $i_{em}$ traverse l'élément 186 et sort par une première sortie 190. L'élément 186 comporte également une deuxième sortie 192 sur laquelle la tension retranscrivant la valeur du courant $i_{em}$ est délivrée et qui est couplée à l'entrée du convertisseur 142.

Dans ce troisième mode de réalisation, le dispositif 100 comporte également un premier commutateur 194 assurant le couplage ou non entre la première sortie 190 de l'élément 186 et la deuxième électrode de sortie 110 de l'élément de conversion 106, selon son état ouvert ou fermé. Du fait que l'élément 186 ne modifie pas le courant délivré par l'élément de conversion 106, le courant délivré sur la première sortie 190 de l'élément 186 est égal au courant délivré sur la première électrode de sortie 108 de l'élément de conversion 106. Le premier commutateur 194 peut être vu comme couplant ou non les électrodes de sortie 108, 110 entre elles suivant son état ouvert ou fermé.

Le dispositif 100 selon le troisième mode de réalisation comporte également une capacité de résonance 196 comportant une première borne couplée au premier commutateur 194 et à la première sortie 190 de l'élément 186, et une deuxième borne couplée à un deuxième commutateur 198 assurant le couplage ou non entre la deuxième borne de la capacité de résonance 196 et la première borne d'entrée 118 du dispositif 116, selon son état ouvert ou fermé.

Le générateur électrique 104 comporte également l'inverseur 135 permettant d'inverser le signal de commande reçu sur l'entrée de commande 126 du générateur 104. Le premier commutateur 194 est commandé par le signal délivré en sortie de l'inverseur 135 et le deuxième commutateur 198 est commandé par le signal de commande reçu sur l'entrée de commande 126. Ainsi, les premiers et deuxième commutateurs 194, 198 sont configurés pour coupler de manière alternée la première électrode de sortie 108 de l'élément de conversion 106 à la deuxième électrode de sortie 110 de l'élément de conversion 106 ou à une première borne d'entrée 118 du dispositif 116 de conversion de tension alternatif - continu à travers la capacité de résonance 196. La deuxième borne d'entrée 118 du dispositif de conversion 116 est couplée électriquement à la deuxième électrode de sortie 110 de l'élément de conversion 106.

Dans le dispositif 100 selon le troisième mode de réalisation, le premier commutateur 194 est fermé la majorité du temps. Le courant circulant dans le premier commutateur 194, qui correspond au courant de court-circuit du générateur électromagnétique, grandit au fur et à mesure que la vibration déplace l'élément magnétique de l'élément de conversion 106 vis-à-vis de l'ensemble des spires de la bobine ou des bobines de l'élément de conversion 106. Quand le courant atteint un extremum, c'est-à-dire est déphasé d'un certain angle dont la valeur est déterminée par les ILOs 150, 154, le premier commutateur 194 s'ouvre et le deuxième commutateur 198 se ferme. La ou les bobines de l'élément de conversion 106 entrent alors en résonance avec la capacité 196, et le courant commence à osciller à haute fréquence, par exemple entre 10 kHz et 100 kHz. La fréquence de cette oscillation est supérieure à celle de la vibration de l'élément résonant 102 qui est par exemple comprise entre 10 Hz et 200 Hz. Le deuxième commutateur 198 est maintenu fermé pendant une demi-période de résonance du circuit LC formé par la ou les bobines de l'élément de conversion 106 et la capacité de résonance 196, c'est-à-dire

$$\frac{T_{res}}{2} = \pi\sqrt{L_{em}C_{inv}}$$

, avec $T_{res}$ la période de résonance, $L_{em}$ la valeur de l'inductance formée par la ou les bobines de l'élément de conversion 106, et $C_{inv}$ la valeur de la capacité de résonance 196. La fermeture du deuxième commutateur 198 permet d'inverser la polarisation du courant délivré par l'élément de conversion 106. Une partie de l'énergie (

$$E = \int_0^{T_{res}/2} i_{em}v_{dc}dt$$

) est conservée dans la capacité de sortie 136 pendant l'inversion du courant dans la bobine. Le courant se déverse donc dans la capacité de sortie 136 du montage pendant un temps égal au délai fixé par l'élément 162.

Le courant délivré par l'élément de conversion 106 est alors envoyé dans la capacité de sortie 136 pendant une durée égale au retard appliqué par l'élément 162. Pendant cette durée, la ou les bobines de l'élément de conversion 106 et la capacité de sortie 136 forment un circuit LC parallèle en oscillation.

Dans les modes de réalisation précédemment décrits, les ILO 150 et 154 correspondent à des ILO à relaxation. D'autres architectures à base d'ILO peuvent être utilisées, comme par exemple des ILO harmoniques. De plus, il est possible que le dispositif 100 soit doté d'un circuit de pré-calibration du ou des ILO du dispositif 100 réglant, avant l'utilisation du dispositif 100, la fréquence d'oscillation libre et/ou la plage de verrouillage du ou des ILO du dispositif 100.

En variante des modes de réalisation précédemment décrits, il est possible que le dispositif 116 de conversion de tension alternatif - continu du générateur électrique 104 comporte des éléments différents du pont de diodes précédemment décrit, correspondant par exemple à un redresseur actif double alternance.

En variante des modes de réalisation précédemment décrits, l'élément 106 de conversion d'énergie mécanique de vibration du résonateur mécanique 102 en charges électriques peut comporter une ou plusieurs bobines couplées à un élément magnétique.

En variante des modes de réalisation précédemment décrits, il est possible qu'un filtre soit interposé entre la sortie 146 du convertisseur 142 et l'entrée d'injection 152 du premier ILO 150, en fonction du signal souhaité sur l'entrée d'injection 152 du premier ILO 150.

Dans les modes et exemples de réalisation précédemment décrits, le dispositif 100 est utilisé en tant que dispositif de récupération d'énergie vibratoire. En variante, le dispositif 100 peut être utilisé en tant que dispositif d'amortissement d'énergie vibratoire. Dans ce cas, le dispositif 100 peut ne pas comporter le dispositif de conversion 116 et la capacité de sortie 136.

**Références citées**

1) US 8 773 004 B2

2) E. Lefeuvre et al., « A comparison between several vibration-powered piezoelectric generators for standalone systems » Sensors and Actuators A : physical, 126405-16, 2006.

3) E. Lefeuvre et al., « Power and frequency bandwidth improvement of piezoelectric energy harvesting devices using phase-shifted synchronous electric charge extraction interface circuit », Journal of Intelligent Material Systems and Structures, 2017.

4) Y. Cai et al., « A piezoelectric energy-harvesting interface circuit with fully autonomous conjugate impédance matching, 156% extended bandwidth, and 0.38uW power consumption », IEEE International Solid-State Circuit Conférence (ISSCC) 2018.

5) Martin Nielsen-Lönn et al., « Design of Efficient CMOS Rectifiers for Integrated Piezo-MEMS Energy-Harvesting Power Management Systems », 2015 European Conférence on Circuit Theory and Design (ECCTD), Trondheim, Norway, 2015.

6) Sijun Du et al., « A Fully Integrated Split-Electrode SSHC Rectifier for Piezoelectric Energy Harvesting », IEEE Journal of Solid-State Circuits, vol.54, Issue 6, juin 2019, pages 1733-1743.

7) L. Liu et al., « An Efficient Interface Circuit for Miniature Piezoelectric Energy Harvesting with P-SSHC », Journal of Circuits, Systems and Computers, 2019.

8) A. Morel et al., « A shock optimized SECE integrated circuit », IEEE J. Solid-State Circuit, vol. 53, n°12, décembre 2018, pages 3420-3433.

9) N. Goux et al., « A 500 pW 16 KHz Injection Locked Oscillator for Ultra-Low Power Time-Domain ADC Application », 2018 16th IEEE International New Circuits and Systems Conférence, p. 200-204.

10) A. Morel et al., « Self-Tunable Phase-Shifted SECE Piezoelectric Energy-Harvesting IC with a 30 nW MPPT Achieving 446% Energy-Bandwidth Improvement and 94% Efficiency », 2020 IEEE International Solid- State Circuits Conférence - (ISSCC).

**Revendications**

1. Dispositif (100) de récupération ou d'amortissement d'énergie vibratoire d'un résonateur mécanique (102), comprenant au moins :

   - un générateur électrique (104) comprenant au moins un élément de conversion (106) d'énergie mécanique de vibration du résonateur mécanique (102) en charges électriques couplé mécaniquement au résonateur mécanique (102) et configuré pour délivrer un signal de conversion, correspondant soit à une tension sinusoïdale obtenue entre des première et deuxième électrodes de sortie (108, 110) de l'élément de conversion (106) soit à un courant sinusoïdal obtenu sur la première électrode de sortie (108) de l'élément de conversion (106), de fréquence égale à la fréquence de vibration du résonateur mécanique (102), le générateur électrique (104) étant configuré pour transférer périodiquement, sur commande d'un signal destiné à être reçu sur une entrée de commande (126), au moins une partie des charges électriques de l'une à l'autre des première et deuxième électrodes de sortie (108, 110) de l'élément de conversion (106) ;
   - un convertisseur (142) comprenant une entrée (144) couplée électriquement à la première électrode de sortie (108) de l'élément de conversion (106) et configuré pour délivrer sur une sortie (146) un signal carré de fréquence égale à la fréquence du signal de conversion ;
   - un dispositif (148) de conversion de variation de fréquence en variation de phase, comprenant au moins un premier oscillateur verrouillé par injection (150) dont une entrée d'injection (152) est couplée électriquement à la sortie (146) du convertisseur (142) et configuré tel que sa fréquence d'oscillation libre soit sensiblement égale à la fréquence de résonance du résonateur mécanique (102), et configuré pour délivrer, sur une sortie couplée électriquement à l'entrée de commande (126) du générateur électrique (104), un signal de commande périodique de fréquence égale à la fréquence du signal de conversion et dont un déphasage, par rapport au signal de conversion, est fonction de la différence entre la fréquence du signal de conversion et la fréquence de résonance du résonateur mécanique (102).

2. Dispositif (100) selon la revendication 1, dans lequel le convertisseur (142) est configuré tel que le signal carré délivré ait une première valeur lorsque la dérivée du signal de conversion est positive et ait une deuxième valeur, différente de la première valeur, lorsque la dérivée du signal de conversion est négative.

3. Dispositif (100) selon l'une des revendications précédentes, dans lequel le dispositif (148) de conversion de variation de fréquence en variation de phase comporte en outre :

- un deuxième oscillateur verrouillé par injection (154) dont une entrée d'injection (156) est couplée à la sortie du premier oscillateur verrouillé par injection (150) et configuré tel que sa fréquence d'oscillation libre soit sensiblement égale à la fréquence de résonance du résonateur mécanique (102) ;
- un circuit déphaseur 180° (158) dont une entrée est couplée à la sortie du deuxième oscillateur verrouillé par injection (154).

4. Dispositif (100) selon la revendication 3, dans lequel le dispositif (148) de conversion de variation de fréquence en variation de phase comporte en outre une porte OU EXCLUSIF (160) dont une première entrée est couplée électriquement à la sortie du circuit déphaseur 180° (158), une deuxième entrée est couplée électriquement à la sortie du circuit déphaseur 180° (158) par l'intermédiaire d'un élément de retard (162), et délivrant en sortie le signal de commande périodique.

5. Dispositif (100) selon la revendication 4, dans lequel la sortie de la porte OU EXCLUSIF (160) est couplée à l'entrée de commande (126) du générateur électrique (104) par l'intermédiaire d'un amplificateur (164).

6. Dispositif (100) selon l'une des revendications précédentes, dans lequel le générateur électrique (104) comporte en outre :

- un élément (112) de stockage d'énergie électrique comprenant une première électrode (114) couplée électriquement à la première électrode de sortie (108) de l'élément de conversion (106) ;
- un dispositif (116) de conversion de tension alternatif - continu comprenant une première borne d'entrée (118) couplée électriquement à la première électrode de sortie (108) de l'élément de conversion (106) et une deuxième borne d'entrée (120) couplée électriquement à une deuxième électrode (122) de l'élément (112) de stockage d'énergie électrique ;
- un commutateur bidirectionnel (124) configuré pour coupler ou non la deuxième électrode (122) de l'élément (112) de stockage d'énergie électrique à la deuxième électrode de sortie (110) de l'élément de conversion (106) en fonction de la valeur du signal reçu sur l'entrée de commande (126) du générateur électrique (104).

7. Dispositif (100) selon l'une des revendications 1 à 5, dans lequel le générateur électrique (104) comporte :

- un élément (112) de stockage d'énergie électrique comprenant une première électrode (114) couplée électriquement à la première électrode de sortie (108) de l'élément de conversion (106) ;
- un dispositif (116) de conversion de tension alternatif - continu ;
- un commutateur bidirectionnel (124) configuré pour coupler ou non une deuxième électrode (122) de l'élément (112) de stockage d'énergie électrique à une première borne d'entrée (118) du dispositif (116) de conversion de tension alternatif - continu, et coupler ou non la deuxième électrode de sortie (110) de l'élément de conversion (106) à une deuxième borne d'entrée (120) du dispositif (116) de conversion de tension alternatif - continu, en fonction de la valeur du signal reçu sur l'entrée de commande (126) du générateur électrique (104).

8. Dispositif (100) selon l'une des revendications 6 ou 7, dans lequel l'élément (112) de stockage d'énergie électrique comporte au moins une inductance ou au moins une capacité.

9. Dispositif (100) selon l'une des revendications 1 à 5, dans lequel le générateur électrique (104) comporte :

- un dispositif (116) de conversion de tension alternatif- continu ;

- des premiers et deuxième commutateurs (194, 198) configurés pour coupler de manière alternée la première électrode de sortie (108) de l'élément de conversion (106) à la deuxième électrode de sortie (110) de l'élément de conversion (106) ou à une première borne d'entrée (118) du dispositif (116) de conversion de tension alternatif- continu à travers une capacité de résonance (196) ;

et dans lequel une deuxième borne d'entrée (120) du dispositif (116) de conversion de tension alternatif - continu est couplée électriquement à une deuxième électrode de sortie (110) de l'élément de conversion (106).

10. Dispositif (100) selon l'une des revendications 6 à 9, dans lequel le dispositif (116) de conversion de tension alternatif - continu comporte un pont de diodes.

11. Dispositif (100) selon l'une des revendications 6 à 10, dans lequel le générateur électrique (104) comporte en outre une capacité de sortie (136) couplée électriquement à des bornes de sortie (138, 140) du dispositif (116) de conversion de tension alternatif- continu.

12. Dispositif (100) selon la revendication 1, dans lequel le générateur électrique (104) comporte :

- un dispositif (116) de conversion de tension alternatif - continu comprenant des première et deuxième bornes d'entrée (118, 120) couplées respectivement aux première et deuxième électrodes de sortie (108, 110) de l'élément de conversion (106) ;
- un convertisseur Buck (166) comprenant des première et deuxième bornes d'entrée (168, 170) couplées respectivement à des première et deuxième bornes de sortie (138, 140) du dispositif (116) de conversion de tension alternatif - continu.

13. Dispositif (100) selon la revendication 12, dans lequel le dispositif (148) de conversion de variation de fréquence en variation de phase comporte en outre :

- un deuxième oscillateur verrouillé par injection (154) dont une entrée d'injection (156) est couplée à la sortie du premier oscillateur verrouillé par injection (150) et configuré tel que sa fréquence d'oscillation libre soit sensiblement égale à la fréquence de résonance du résonateur mécanique (102) ;
- un circuit déphaseur 180° (158) dont une entrée est couplée à la sortie du deuxième oscillateur verrouillé par injection (154) ;
- une bascule D (176) comprenant une entrée d'horloge couplée à la sortie du circuit déphaseur 180° (158), une entrée de donnée sur laquelle un potentiel électrique de valeur non nulle est appliqué, une entrée de réinitialisation, et une sortie couplée à une entrée de commande d'un interrupteur (184) du convertisseur Buck (166) ;
- un comparateur de tension (178) muni de deux bornes d'entrée sur lesquelles une tension délivrée sur les première et deuxième bornes de sortie (138, 140) du dispositif (116) de conversion de tension alternatif - continu est appliquée, et d'une sortie couplée à l'entrée de réinitialisation de la bascule D (176).

14. Dispositif (100) selon l'une des revendications précédentes, dans lequel l'élément de conversion (106) comporte au moins une portion de matériau piézoélectrique ou au moins une bobine couplée à un élément magnétique.

**Patentansprüche**

1. Vorrichtung (100) zur Rückgewinnung oder Dämpfung von Schwingungsenergie eines mechanischen Resonators (102), mindestens umfassend:

- Einen elektrischen Generator (104), der mindestens ein Element zur Umwandlung (106) der mechanischen Schwingungsenergie des mechanischen Resonators (102) in elektrische Ladungen umfasst, das mechanisch mit dem mechanischen Resonator (102) gekoppelt ist und konfiguriert, um ein Umwandlungssignal zu liefern, das entweder mit einer Sinusspannung übereinstimmt, die zwischen einer ersten und einer zweiten Ausgangselektrode (108, 110) des Umwandlungselements (106) erhalten wird, oder einem sinusförmigen Strom, der an der ersten Ausgangselektrode (108) des Umwandlungselements (106) erhalten wird, mit einer Frequenz, die der Schwingungsfrequenz des mechanischen Resonators (102) entspricht, wobei der elektrische Generator (104) konfiguriert ist, um, auf Befehl eines Signals, das dazu bestimmt ist, an einem Steuereingang (126) empfangen zu werden, periodisch mindestens einen Teil der elektrischen Ladungen von einer der ersten auf die andere der zweiten Ausgangselektroden (108, 110) des Umwandlungselements (106) zu transferieren;
- einen Konverter (142), der einen Eingang (144) umfasst, der elektrisch mit der ersten Ausgangselektrode (108) des Umwandlungselements (106) gekoppelt ist, und konfiguriert, um an einem Ausgang (146) ein Rechtecksignal mit einer Frequenz zu liefern, die der Frequenz des Umwandlungssignals entspricht;
- eine Vorrichtung (148) zum Umwandeln einer Frequenzvariation in eine Phasenvariation, die mindestens einen ersten injektionsgesteuerten Oszillator (150) umfasst, bei dem ein Injektionseingang (152) elektrisch mit dem Ausgang (146) des Konverters (142) gekoppelt ist, und so konfiguriert ist, dass seine Frequenz der freien Oszillation im Wesentlichen der Resonanzfrequenz des mechanischen Resonators (102) entspricht, und konfiguriert ist, um an einem Ausgang, der elektrisch mit dem Steuereingang (126) des elektrischen Generators (104) gekoppelt ist, ein periodisches Steuersignal mit einer Frequenz zu liefern, die der Frequenz des Umwandlungssignals entspricht, und bei der eine Phasenverschiebung, relativ zum Umwandlungssignal, eine Funktion der Differenz zwischen der Frequenz des Umwandlungssignals und der Resonanzfrequenz des mechanischen Resonators (102) ist.

2. Vorrichtung (100) nach Anspruch 1, wobei der Konverter (142) so konfiguriert ist, dass das gelieferte Rechtecksignal einen ersten Wert hat, wenn die Ableitung des Umwandlungssignals positiv ist, und einen zweiten Wert, der sich vom ersten Wert unterscheidet, wenn die Ableitung des Umwandlungssignals negativ ist.

3. Vorrichtung (100) nach einem der vorhergehenden Ansprüche, wobei die Vorrichtung (148) zum Umwandeln einer Frequenzvariation in eine Phasenvariation ferner beinhaltet:

   - Einen zweiten injektionsgesteuerten Oszillator (154), bei dem ein Injektionseingang (156) mit dem Ausgang des ersten injektionsgesteuerten Oszillator (150) gekoppelt ist und so konfiguriert, dass seine Frequenz der freien Oszillation im Wesentlichen der Resonanzfrequenz des mechanischen Resonators (102) entspricht;
   - einen 180° phasenverschobenen Kreis (158), bei dem ein Eingang mit dem Ausgang des zweiten injektionsgesteuerten Oszillators (154) gekoppelt ist.

4. Vorrichtung (100) nach Anspruch 3, wobei die Vorrichtung (148) zum Umwandeln einer Frequenzvariation in eine Phasenvariation ferner ein Exklusiv-Oder-Gatter (160) beinhaltet, bei dem ein erster Eingang elektrisch mit dem Ausgang des 180° phasenverschobenen Kreises (158) gekoppelt ist, und ein zweiter Eingang elektrisch mit dem Ausgang des 180° phasenverschobenen Kreises (158) durch ein Verzögerungselement (162) gekoppelt ist, und das periodische Steuersignal am Ausgang liefert.

5. Vorrichtung (100) nach Anspruch 4, wobei der Ausgang des Exklusiv-Oder-Gatters (160) durch einen Verstärker (164) mit dem Steuereingang (126) des elektrischen Generators (104) gekoppelt ist.

6. Vorrichtung (100) nach einem der vorhergehenden Ansprüche, wobei der elektrische Generator (104) ferner beinhaltet:

   - Ein Speicherelement elektrischer Energie (112), das eine erste Elektrode (114) umfasst, die elektrisch mit der ersten Ausgangselektrode (108) des Umwandlungselements (106) gekoppelt ist;
   - eine Vorrichtung zur Wechsel-Gleichspannungsumwandlung (116), die eine erste Eingangsklemme (118) umfasst, die elektrisch mit der ersten Ausgangselektrode (108) des Umwandlungselements (106) gekoppelt ist, und eine zweite Eingangsklemme (120), die elektrisch mit einer zweiten Elektrode (122) des Speicherelements elektrischer Energie (112) gekoppelt ist;
   - einen bidirektionalen Wechselschalter (124), der konfiguriert ist, um die zweite Elektrode (122) des Speicherelements elektrischer Energie (112) mit der zweiten Ausgangselektrode (110) des Umwandlungselements (106) zu koppeln oder nicht, in Abhängigkeit vom Wert des Signals, das am Steuereingang (126) des elektrischen Generators (104) empfangen wurde.

7. Vorrichtung (100) nach einem der Ansprüche 1 bis 5, wobei der elektrische Generator (104) beinhaltet:

   - Ein Speicherelement elektrischer Energie (112), das eine erste Elektrode (114) umfasst, die elektrisch mit der ersten Ausgangselektrode (108) des Umwandlungselements (106) gekoppelt ist;
   - eine Vorrichtung zur Wechsel-Gleichspannungsumwandlung (116);
   - einen bidirektionalen Wechselschalter (124), der konfiguriert ist, um eine zweite Elektrode (122) des Speicherelements elektrischer Energie (112) mit einer ersten Eingangsklemme (118) der Vorrichtung zur Wechsel-Gleichspannungsumwandlung (116) zu koppeln oder nicht, und die zweite Ausgangselektrode (110) des Umwandlungselements (106) mit einer zweiten Eingangsklemme (120) der Vorrichtung zur Wechsel-Gleichspannungsumwandlung (116) zu koppeln, in Abhängigkeit vom Wert des Signals, das am Steuereingang (126) des elektrischen Generators (104) empfangen wurde.

8. Vorrichtung (100) nach einem der Ansprüche 6 oder 7, wobei das Speicherelement elektrischer Energie (112) mindestens eine Induktivität beinhaltet oder mindestens eine Kapazität.

9. Vorrichtung (100) nach einem der Ansprüche 1 bis 5, wobei der elektrische Generator (104) beinhaltet:

- Eine Vorrichtung zur Wechsel-Gleichspannungsumwandlung (116);
- erste und zweite Wechselschalter (194, 198), die konfiguriert sind, um auf alternierende Weise die erste Ausgangselektrode (108) des Umwandlungselements (106) mit der zweiten Ausgangselektrode (110) des Umwandlungselements (106) zu koppeln oder mit der ersten Eingangsklemme (118) der Vorrichtung zur Wechsel-Gleichspannungsumwandlung (116), mittels einer Resonanzkapazität (196);

und wobei eine zweite Eingangsklemme (120) der Vorrichtung zur Wechsel-Gleichspannungsumwandlung (116) elektrisch mit einer zweiten Ausgangselektrode (110) des Umwandlungselements (106) gekoppelt ist.

10. Vorrichtung (100) nach einem der Ansprüche 6 bis 9, wobei die Vorrichtung zur Wechsel-Gleichspannungsumwandlung (116) eine Diodenbrücke beinhaltet.

11. Vorrichtung (100) nach einem der Ansprüche 6 bis 10, wobei der elektrische Generator (104) ferner eine Ausgangkapazität (136) beinhaltet, die elektrisch an Ausgangsklemmen (138, 140) der Vorrichtung zur Wechsel-Gleichspannungsumwandlung (116) gekoppelt ist.

12. Vorrichtung (100) nach Anspruch 1, wobei der elektrische Generator (104) beinhaltet:

- Eine Vorrichtung zur Wechsel-Gleichspannungsumwandlung (116), die erste und zweite Eingangsklemmen (118, 120) umfasst, die jeweils mit der ersten und zweiten Ausgangselektrode (108, 110) des Umwandlungselements (106) gekoppelt sind;
- einen Buck-Konverter (166), der erste und zweite Eingangsklemmen (168, 170) umfasst, die jeweils mit ersten und zweiten Ausgangsklemmen (138, 140) der Vorrichtung zur Wechsel-Gleichspannungsumwandlung (116) gekoppelt sind.

13. Vorrichtung (100) nach Anspruch 12, wobei die Vorrichtung (148) zum Umwandeln einer Frequenzvariation in eine Phasenvariation ferner beinhaltet:

- Einen zweiten injektionsgesteuerten Oszillator (154), bei dem ein Injektionseingang (156) mit dem Ausgang des ersten injektionsgesteuerten Oszillators (150) gekoppelt ist und so konfiguriert, dass seine Frequenz der freien Oszillation im Wesentlichen der Resonanzfrequenz des mechanischen Resonators (102) entspricht;
- einen 180° phasenverschobenen Kreis (158), bei dem ein Eingang mit dem Ausgang des zweiten injektionsgesteuerten Oszillators (154) gekoppelt ist;
- ein D-Flipflop (176), das einen Takteingang umfasst, der mit dem Ausgang des 180° phasenverschobenen Kreises (158) gekoppelt ist, einen Dateneingang, an den ein elektrisches Potential mit einem Wert von ungleich null angelegt ist, einen Rückstellungseingang und einen Ausgang, der mit einem Steuereingang eines Schalters (184) des Buck-Konverters (166) gekoppelt ist;
- einen Spannungskomparator (178), der mit zwei Eingangsklemmen versehen ist, an denen eine an die erste und zweite Ausgangsklemme (138, 140) der Vorrichtung zur Wechsel-Gleichspannungsumwandlung (116) gelieferte Spannung angelegt ist, und mit einem Ausgang, der mit dem Rückstellungseingang des D-Flipflops (176) gekoppelt ist.

14. Vorrichtung (100) nach einem der vorhergehenden Ansprüche, wobei das Umwandlungselement (106) mindestens einen Bereich aus piezoelektrischem Material beinhaltet oder mindestens eine Spule, die mit einem magnetischen Element gekoppelt ist.

**Claims**

1. A device (100) for recovering or dampening vibratory energy from a mechanical resonator (102), comprising at least :

    - an electrical generator (104) comprising at least one element (106) for converting mechanical vibration energy of the mechanical resonator (102) into electrical charges mechanically coupled to the mechanical resonator and configured to deliver a conversion signal, corresponding either to a sinusoidal voltage obtained between first and second output electrodes (108, 110) of the said at least one conversion element (106) or to a sinusoidal current obtained on the first output electrode (108) of the said at least one conversion element, of frequency equal to the vibration frequency of the mechanical resonator (102), the electrical generator (104) being configured to periodically transfer, on command of a signal to be received on a control input (126), at least part of the electrical charges from one to the other of the first and second output electrodes (108, 110) of the said at least one conversion element;
    - a converter (142) comprising an input (144) electrically coupled to the first output electrode (108) of the conversion element (106) and configured to provide at an output (146) a square wave signal of frequency equal to the frequency of the conversion signal.
    - a device (148) for converting frequency variation into phase variation, comprising at least a first injection-locked oscillator (142), an injection input (152) of which is electrically coupled to the output (146) of the converter (142) and configured such that its free oscillation frequency is substantially equal to the resonance frequency of the mechanical resonator (102), and configured to deliver on an output electrically coupled to the control input (126) of the electrical generator, a periodic control signal of frequency equal to the frequency of the conversion signal and whose phase shift, relative to the conversion signal, is a function of the difference between the frequency of the conversion signal and the resonance frequency of the mechanical resonator (102).

2. The device according to claim 1, wherein the converter (142) is configured such that the delivered output square wave signal has a first value when the derivative of the conversion signal is positive and has a second value, different from the first value, when the derivative of the conversion signal is negative.

3. The device according to claim 1 or claim 2, wherein the frequency to the phase conversion device (148) further comprises :

    - a second injection-locked oscillator (154), an injection input (156) of which is coupled to the output of the first injection-locked oscillator (150) and configured such that its free-running oscillation frequency is substantially equal to the resonance frequency of the mechanical resonator.
    - a 180° phase shifter circuit (158), an input of which is coupled to the output of the second injection-locked oscillator (154).

4. The device according to claim 3, wherein the frequency-to-phase conversion device (148) further comprises an EXCLUSIVE OR gate (160), a first input of which is electrically coupled to the output of the 180° phase shifter circuit (158), a second input of which is electrically coupled to the output of the 180° phase shifter circuit via an intermediary delay element (162) and delivering the periodic control signal.

5. The device according to claim 4, wherein the output of the EXCLUSIVE OR gate (160) is coupled to the control input (126) of the electrical generator via an amplifier (164).

6. The device according to any of the preceding claims, wherein the electrical generator (104) further comprises:

    - an electrical energy storage element (116) comprising a first electrode (114) electrically coupled to the first output electrode (108) of the conversion element (106);
    - an AC-to-DC voltage conversion device (116) comprising a first input terminal (118) electrically coupled to the first output electrode (108) of the conversion element and a second input terminal (120) electrically coupled to a second electrode (122) of the electrical energy storage element; and
    - a bi-directional switch (124) configured to couple or not couple the second electrode (122) of the electrical energy storage element to the second output electrode (110) of the conversion element as a function of the value of the signal received at the control input (126) of the electrical generator.

7. The device according to any of claims 1 to 5, wherein the electrical generator (104) comprises:

- an electrical energy storage element (112) comprising a first electrode (114) electrically coupled to the first output electrode (108) of the conversion element.
- an AC-to-DC voltage conversion device (116); and
- a bi-directional switch (124) configured to couple or not couple a second electrode of the electrical energy storage element to a first input terminal of the AC-DC voltage conversion device, and couple or not couple the second output electrode of the conversion element to a second input terminal of the AC-DC voltage conversion device, as a function of the value of the signal received at the control input of the electrical generator.

8. The device according to claim 6 or claim 7, wherein the electrical energy storage element (112) comprises at least one inductance or at least one capacitance.

9. The device according to anyone of claims 1 to 5, wherein the electrical generator comprises:

- an AC-to-DC voltage conversion device (116);
- first and second switches (194, 198) configured to alternately couple the first output electrode (108) of the conversion element to the second output electrode (110) of the conversion element or to a first input terminal (118) of the AC-to-DC voltage conversion device through a resonant capacitance;

and wherein a second input terminal (120) of the AC-DC voltage conversion device is electrically coupled to a second output electrode (110) of the conversion element.

10. The device according to anyone of claims 6 to 9, wherein the AC-to-DC voltage conversion device comprises a diode bridge.

11. The device according to anyone of claims 6 to 10, wherein the electrical generator further comprises an output capacitance (136) electrically coupled to the output terminals (138, 140) of the AC-to-DC voltage conversion device.

12. The device according to claim 1, wherein the electrical generator comprises:

- an AC-to-DC voltage conversion device (116) comprising the first and second input terminals (118, 120) coupled to the first and second output electrodes (108, 110) of the conversion element, respectively.
- a Buck converter (166) comprising the first and second input terminals (168, 170) respectively coupled to the first and second output terminals (138, 140) of the AC-to-DC voltage conversion device.

13. The device according to claim 17, wherein the frequency to phase conversion device (148) further comprises :

- a second injection-locked oscillator (154), of which an injection input (156) coupled to the output of the first injection-locked oscillator (150) and configured such that its free-running oscillation frequency, is substantially equal to the resonance frequency of the mechanical resonator.
- a 180° phase shifter circuit (158), one input of which is coupled to the output of the second injection-locked oscillator.
- a D flip-flop (176) comprising a clock input coupled to the output of the 180° phase shifter circuit (158), a data input to which a non-zero electric potential is applied, a reset input, and an output coupled to a control input of a Buck converter switch.
- a voltage comparator (178) having two input terminals to which a voltage supplied to the first and second output terminals of the AC-DC voltage conversion device is applied, and an output coupled to the reset input of the D flip-flop (176).

14. The device according to claim 1, wherein the conversion element (106) comprises at least one portion of piezoelectric material or at least one coil coupled to a magnetic element.

FIG.1

FIG.2

FIG.3

FIG.4

FIG.5

$$\Delta\phi = \frac{\pi}{2} + \alpha(f_{LOCK} - f_0)$$

FIG.6

FIG.7

FIG.8

FIG.9

FIG.10

FIG.11

FIG.12

FIG.13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8773004 B2

- EP 3306802 A

**Littérature non-brevet citée dans la description**

- **E. LEFEUVRE et al.** Power and frequency bandwidth improvement of piezoelectric energy harvesting devices using phase-shifted synchronous electric charge extraction interface circuit. *Journal of Intelligent Material Systems and Structures,* 2017
- **Y. CAI et al.** A piezoelectric energy-harvesting interface circuit with fully autonomous conjugate impédance matching, 156% extended bandwidth, and 0.38uW power consumption. *IEEE International Solid-State Circuit Conférence (ISSCC),* 2018
- **MARTIN NIELSEN-LÖNN et al.** Design of Efficient CMOS Rectifiers for Integrated Piezo-MEMS Energy-Harvesting Power Management Systems. *2015 European Conference on Circuit Theory and Design (ECCTD), Trondheim, Norway,* 2015
- **SIJUN DU et al.** A Fully Integrated Split-Electrode SSHC Rectifier for Piezoelectric Energy Harvesting. *IEEE Journal of Solid-State Circuits,* Juin 2019, vol. 54 (6), 1733-1743
- **L. LIU et al.** An Efficient Interface Circuit for Miniature Piezoelectric Energy Harvesting with P-SSHC. *Journal of Circuits, Systems and Computers,* 2019

- **A. MOREL et al.** A shock optimized SECE integrated circuit. *IEEE J. Solid-State Circuit,* Décembre 2018, vol. 53 (12), 3420-3433
- **N. GOUX et al.** A 500 pW 16 KHz Injection Locked Oscillator for Ultra-Low Power Time-Domain ADC Application. *16th IEEE International New Circuits and Systems Conférence,* 2018, 200-204
- **A. MOREL et al.** Self-Tunable Phase-Shifted SECE Piezoelectric Energy-Harvesting IC with a 30 nW MPPT Achieving 446% Energy-Bandwidth Improvement and 94% Efficiency. *IEEE International Solid-State Circuits Conférence - (ISSCC),* 2020
- **E. LEFEUVRE et al.** A comparison between several vibration-powered piezoelectric generators for standalone systems. *Sensors and Actuators A : physical,* 2006, 126405-16
- **MARTIN NIELSEN-LÖNN et al.** Design of Efficient CMOS Rectifiers for Integrated Piezo-MEMS Energy-Harvesting Power Management Systems. *2015 European Conférence on Circuit Theory and Design (ECCTD), Trondheim, Norway,* 2015